# EUROPEAN PATENT SPECIFICATION

(11) **EP 0 751 850 B1**
(45) Date of publication and mention of the grant of the patent: **12.07.2000**
(21) Application number: 95914822.2
(22) Date of filing: 22.03.1995
(51) Int. Cl.: B23P 17/02, B23D 31/00

(54) **METHOD AND APPARATUS FOR FRACTURING CONNECTING RODS AND THE LIKE**
VERFAHREN UND VORRICHTUNG ZUM BRUCHTRENNEN VON PLEUELN UND DERGLEICHEN
PROCEDE ET APPAREIL DE RUPTURE DE BIELLES ET AUTRES

(30) Priority: 25.03.1994 CA 2119937; 31.03.1994 US 220490
(43) Date of publication of application: 08.01.1997
(73) Proprietor: TRI-WAY MACHINE LTD., Sterling Heights, MI 48310 (US)
(72) Inventor: JONES, Joel, W., Windsor, Ontario N8Y 1B8 (CA); PRINCE, David, R., E. Kingsville, Ontario N9Y 1A4 (CA)
(74) Representative: Shanks, Andrew
(86) International application number: US9503620
(87) International publication number: WO9526257

(56) References cited:
- DE-U- 9 210 167
- US-A- 4 569 109
- US-A- 4 768 694
- US-A- 5 105 538
- US-A- 5 131 577
- US-A- 5 169 046

## Description

This invention relates to the fracture separation, into a bearing cap and a connecting rod, of an integral preform, while ensuring that the separated pieces will be capable of re-unification, in a high production environment.

### BACKGROUND OF THIS INVENTION

Numerous methods have been employed to separate connecting rod preforms by fracturing, both in laboratory and production environments. These include cryogenic cooling or electron beam exposure to embrittle the fracture area, fracturing by wedge actuation of an expanding mandrel, and linear opposing pulling forces to separate the bearing cap from the connecting rod preform. The following patents are representative of the prior art:
US Patent No 4,569,109, issued February 11, 1986;
US Patent No 4,768,694, issued September 6, 1988;
US Patent No 4,993,134, issued February 19, 1991.

US Patent 4,768,694 (Fabris et al) describes an apparatus for fracture separating the caps and bodies of integrally formed connecting rod workpieces, the apparatus including separable pilots for receiving the large end bores of the pieces to be fractured, an impact separation ram for rapidly separating the pilots to effect fracture separation, and anti-rotation clamp means movable with the pilots and requiring linear separating motions of the caps from the connecting rod bodies.

Despite these prior developments, certain elements vital to fracture separation continue to have the greatest influence on the quality of the finished connecting rod.

Two of these elements are:
(1) achieving simultaneous fracture along the cracking plane of both legs of the connecting rod. Failure to achieve simultaneous fracture is likely to result in plastic deformation of the crank bore and inhibit re-mating of the two parts;
(2) maintaining positive control over the position of the separated bearing cap and connecting rod body, to ensure accurate micro-alignment during re-mating. Failure to do this may negate the inherent advantages of fracture separation.

### GENERAL DESCRIPTION OF THIS INVENTION

The present invention provides an apparatus and a process for accomplishing the fracture separation, into a bearing cap and a connecting rod, of an integral preform, the latter being composed of powdered metal, cast iron, forged steel, aluminum or any other material suitable for use as a connecting rod. The process of this invention is conducted under ambient conditions and requires no prior embrittlement of the preform, as called for by earlier developments utilizing cryogenic chilling or electron beam hardening.

However, a stress-riser is required to control the location of fracture initiation (i.e. the location of the joint line). The stress-riser may be provided in a prior process by way of (a) V-notch broaching or other equivalent machining means, (b) laser etching, or (c) preforming a stress-riser in the "green" preform prior to firing (baking) and forging.

The present process utilizes a work-holding fixture which retains and locates the connecting rod preform with respect to its manufacturing datum features. The mechanism includes a dual slide ram coupled to a unilateral wedge interposed between a two-piece mandrel which, when activated, effects the fracture separation of the preform into a bearing cap and the connecting rod.

A further aspect of this process is the ability of the work-holding fixture to locate the pre-separated connecting rod preform on the manufacturing datum features, and to maintain this location throughout separation and re-mating. This goal is achieved by constructing the work-holding feature on a precision slide. A lower portion of the work-holding fixture, which rigidly secures the connecting rod body, is affixed to the slide and restrains the connecting rod against any movement. The upper portion of the work-holding fixture, which locates and retains the bearing cap of the ultimate connecting rod, is affixed to a slide saddle movable on the precision slide.

This arrangement allows the bearing cap to move independently of the connecting rod body during separation, while continuing to maintain its precision location with respect to the connecting rod body. The arrangement of the present invention further eliminates any tendency for the bearing cap to rotate during separation, thus promoting simultaneous fracture of both of the connecting rod legs. The re-mating of the separated bearing cap to the connecting rod body is passively accomplished by spring loading the upper portion of the work-holding fixture to return it to its pre-fracture position. Subsequent to the fracture separation and re-mating of the bipartite connecting rod, the work-holding fixture, with is re-mated connecting rod still retained and located, can index out of the separation area for fastener insertion and further processing as required.

More particularly, this invention provides an apparatus for the fracture separation, into a bearing cap and a connecting rod, of an integral preform which is configured to define a cylindrical aperture and two spaced-apart bolt seat shoulders, the apparatus comprising:
a base member;
a guide member fixed with respect to said base member, the guide member defining a first guideway extending in a first direction,
a first slide member mounted to said guide member for sliding movement along said first guideway in said first direction, the first slide member defining a second guideway also extending in said first direction,
a second slide member mounted to said first slide member for sliding movement with respect to said first slide member along said second guideway in said first direction,
a mandrel which is split to define an upper part fixed with respect to the first slide member and a lower part fixed with respect to said base member, said upper part being movable between a first position in which it is spaced away from the lower part and a second position in which it is juxtaposed against the lower part to define a substantially cylindrical body having its axis lying substantially in a second direction perpendicular to said first direction, movement of said upper part being simultaneous with movement of the first slide member along the first guideway with respect to said guide member, the upper and lower parts of said mandrel defining an internal tapered passageway,
a wedge member adapted, when the upper part is in its second position, to enter said tapered passageway and force said mandrel parts apart,
power means for moving said wedge member,
projections defined by said second slide member and adapted to contact the bolt seat shoulders of an integral preform while the cylindrical aperture thereof receives the split mandrel, and
means for selectively urging the second slide member toward the mandrel, thereby securely holding the integral preform in place,
   whereby the wedge member can enter the tapered passageway, forcing the mandrel parts apart and fracturing the preform into a bearing cap and a connecting rod.

Further, this invention provides a process for the fracture separation, into a bearing cap and a connecting rod, of an integral preform which is configured to define a cylindrical aperture and two spaced-apart bolt seat shoulders, the process comprising:
a) fitting they cylindrical aperture of the preform over a substantially cylindrical mandrel which includes separate upper and lower parts,
b) holding the preform in place over the mandrel by pressing against the bolt seat shoulders in the direction toward the mandrel, and
c) forcing the mandrel parts apart while holding the preform in place, thereby to fracture the preform into a bearing cap and a connecting rod;
   in which said upper part of the mandrel is fixed with respect to a first slide member guided in a guideway fixed with respect to the lower part of the mandrel, such that when the parts are forced apart the first slide moves along said guideway, whilst the lower part of the mandrel remains stationary.

### BRIEF DESCRIPTION OF THE DRAWINGS

One embodiment of this invention is illustrated in the accompanying drawings, in which like numerals denote like parts throughout the several views, and in which:
Figure 1 is an elevational view looking at the front of the separation station in a direction perpendicular to the direction of transfer;
Figure 2 is a side elevational view, looking at the separation station from a direction at right angles to the direction of Figure 1, and is partly broken away to show a section along the line 2-2 in Figure 3;
Figure 3 is a horizontal sectional view taken at the line 3-3 in Figure 2, and the line 3-3 in Figure 1; and
Figure 4 is a view similar to that of Figure 3, showing a variant of the element causing the fracture separation.

### DETAILED DESCRIPTION OF THE DRAWINGS

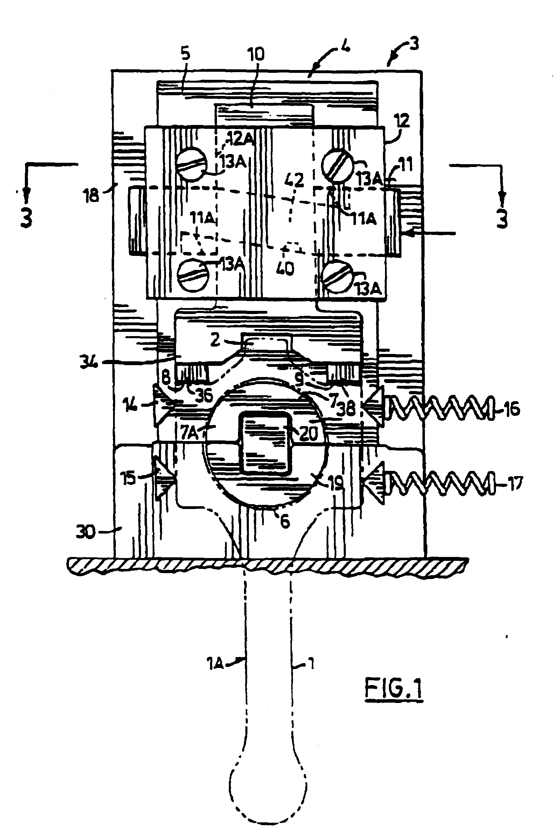

Figure 1 illustrates, in broken lines, a pre-separated preform 1A integrally incorporating a connecting rod 1 and a bearing cap 2, located and secured in a separation station work-holding fixture 3. It is to be noted that the preform 1A is configured to define a cylindrical aperture 6 and two spaced-apart bolt seat shoulders 8 and 9, this being the typical construction.

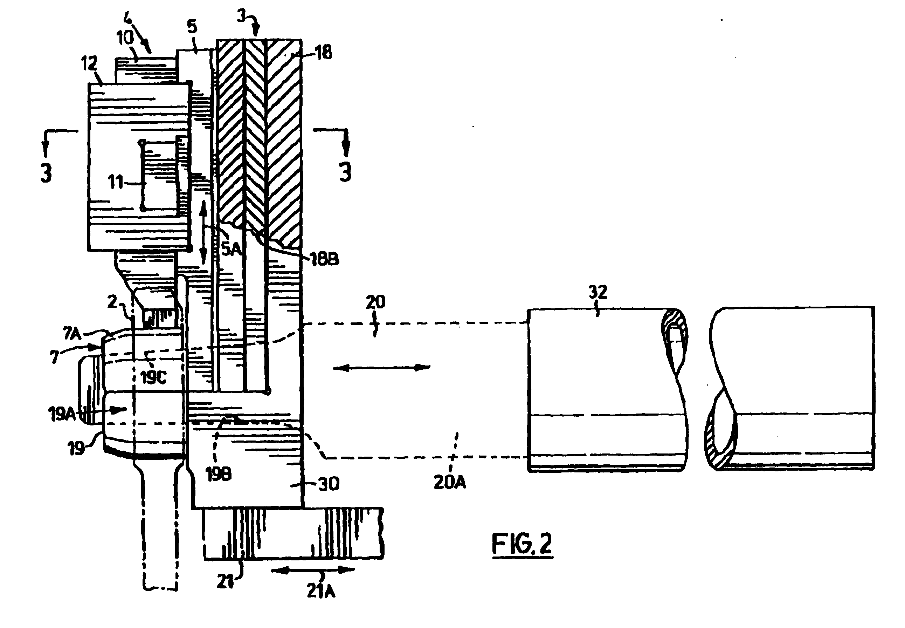

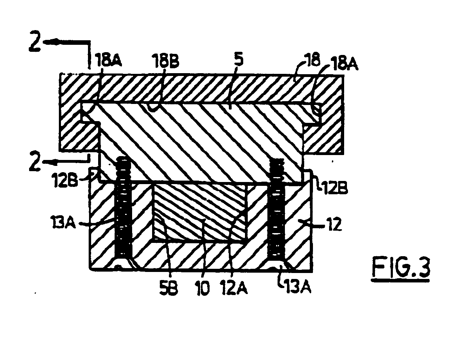

One of the key features of the fixture 3 is the attainment of a three-point, wedge-locked retention for the bearing cap 2, both before and after fracturing. This is accomplished through the use of a small slide assembly 4, which is best understood by comparing Figures 2 and 3.

A slide unit 21 is mounted for horizontal movement along the direction of the arrow 21A. Secured to the slide unit is a base member 30 which is integral with the lower part 19 of a split mandrel (the remainder of which will be described subsequently), and a guide member 18. Defined by the guide member 18 is a first guideway 18B which has two oppositely extending rectangular recesses 18A (See Figure 3). The guideway 18B extends in a direction perpendicular to the arrow 21A.

A first slide member 5 is mounted to the guide member 18 for sliding movement along the first guideway 18B in the vertical direction (arrow 5A in the drawings), and itself contributes to defining a second guideway 5B, parallel with the direction of the first guideway. In Figure 3, which is a horizontal section through the upper part of the assembly shown in Figure 2, a second slide member 10 of rectangular section in its upper portion is trapped between the first slide member 5 and a slide assembly cover 12. In Figure 3, the cover 12 defines a rectangular recess 12A and has lateral projections 12B for securely locating the cover 12 on the first slide member 5. As can also be seen in Figures 1 and 3, threaded fasteners 13A are utilized to secure the cover 12 against the first slide member 5.

As illustrated in Figure 2, the first slide member 5 integrally supports an upper part 7A of a split mandrel 7, from which it will be understood that, when the first slide member 5 moves upwardly with respect to the guide member 18, the upper part 7A of the split mandrel 7 moves upwardly away from the lower part 19. It will further be noted that the axis of the split mandrel 7 lies in a direction substantially parallel to the arrow 21A, and is thus substantially perpendicular to the first guideway 18B.

As further illustrated in Figure 2, the upper and lower parts 7A and 19 of the mandrel 7 together define an internal tapered passageway shown in broken lines at 19A, the passageway 19A being such as to accept a wedge member 20 which, when driven to the left in Figure 2, forces the mandrel parts 7A and 19 apart. It is to be noted that the passageway 19A has a substantially horizontal lower portion 19B and a sloping upper portion 19C, and that the leftward end of the wedge member 20 is correspondingly configured. The purpose for this configuration is to avoid downward force against the lower part 19, and to maximize upward force against the upper part 7A.

Power means for moving the wedge member 20 in Figure 2 is illustrated schematically as a hydraulic or pneumatic cylinder 32. As an alternative, the wedge member 20 may be actuated by a slaved spring motion of known construction (not illustrated).

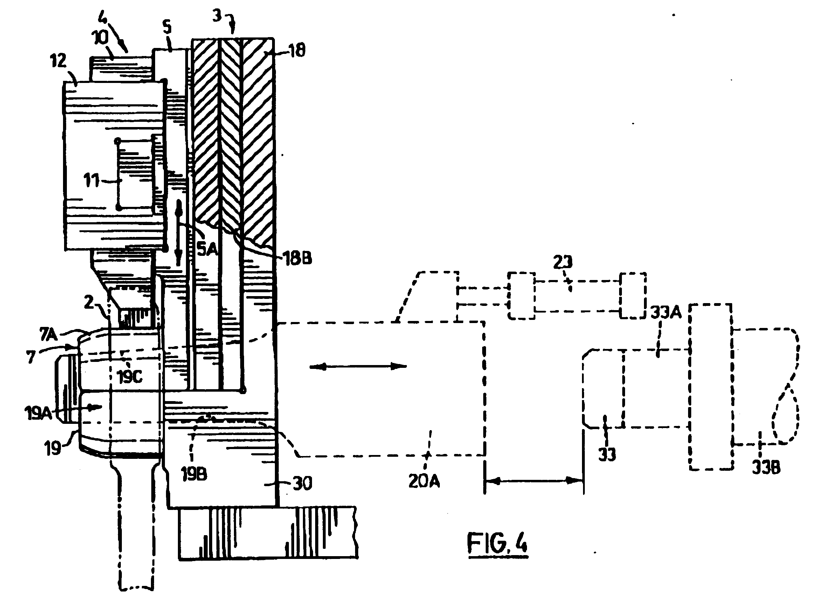

In an alternative construction, illustrated in broken lines in Figure 4, a wedge 20A can first come into direct contact with the tapered passageway at a low force level, creating a pre-load upon the contact surfaces of the internal tapered passageway, whereupon a separate high-velocity ram 33 could impact upon the wedge 20A, thus causing separation of the preform into a cap and a rod. The preload by the wedge has the effect of taking up all slack, and leaving no free travel or lost motion in the upper and lower parts 7 and 19 defining the internal tapered passageway 19A. In Figure 4, the ram 33 is the end of a piston 33A moving in a cylinder 33B. The position of the wedge 20A is controlled by an auxiliary cylinder 23 acting on a flange secured to the wedge 20A.

Referring now to Figures 1 and 2, the second slide member 10 has a widened portion 34 at the bottom, the portion 34 supporting projections 36 and 38 which are adapted to contact the bolt seat shoulders 8 and 9 while the cylindrical aperture 6 in a preform 1A receives the split mandrel 7.

Means are provided, utilizing a camming member 11, for selectively urging the second slide member 10 toward the mandrel 7, thereby securely holding the integral preform 1A in place. In Figure 1, short hatch lines on portions 7A, 36 and 38 show the three-point "capture" of the upper part of the preform 1A.

It will now be understood that, when the wedge member 20 enters the tapered passageway 19A, it forces the mandrel part 7A upwardly away from the part 19, thereby fracturing the preform 1A into a bearing cap and a connecting rod.

The camming member 11 will now be described in greater detail. The cover 12 defines a horizontal, rectangular passage 11A to either side of the recess 12A. The camming member 11 is a Z-shaped cam adapted to be moved by a force along the arrow. The upper part of the second slide member 10 is machined to define a sloping passageway 40 for receiving a central part 42 of the cam, having the same slope as the passageway 40. It will be understood that, as the camming member 11 moves leftwardly (as seen in Figure 1), the second slide member 10 will move downwardly.

Illustrated schematically in Figure 1 are locate and retention locators 14-17. The locators 14 and 15 are fixed or static, whereas the retainers 16 and 17 are dynamic clamps that apply a constant force leftwardly on the preform, seating it firmly against the locators 14 and 15.

More particularly, the locators 14-17 include a first static locator 14 adapted to contact one side of the portion of the preform 1A which is intended to become the bearing cap, and a second static locator adapted to contact one side of the portion of the preform 1A intended to become the connecting rod. On the right in Figure 1, the dynamic locator 16 is adapted to contact the other side of the portion of the preform 1A which is intended to become the bearing cap, white the second dynamic locator 17 is adapted to contact the other side of the portion of the preform 1A which is intended to become the connecting rod. The dynamic locators 16 and 17 can be urged leftwardly by the use of resilient means, such as springs. The locators 14 and 16 are mounted on the first slide member 5 while the locators 15 and 17 are mounted on the base member 30. It will thus be seen that, even though the part carrier is used for transferring the connecting rod from one machine station to another, the locators remain engaged with the preform (the connecting rod components) throughout the fracture and separation cycle.

Utilization of the illustrated apparatus may be defined as a process for the fracture separation, into a bearing cap and the connecting rod, of an integral preform configured to define a cylindrical aperture and two spaced-apart bolt seat shoulders. The process involves first fitting the cylindrical aperture of the preform 1A over the substantially cylindrical mandrel 7 that includes separate upper and lower parts 7A and 19 respectively, then holding the preform 1A in place on the mandrel 7 by causing the projections 36 and 38 to press downwardly against the bolt seat shoulders 8 and 9 respectively in the direction toward the mandrel than forcing the parts 7A and 19 apart (while holding the preform 1A in place) thereby fracturing the preform 1A into a bearing cap 2 and a connecting rod 1. Upon fracture, caused by the high-velocity of the wedge member 20 entering between the mandrel halves 7A and 19, the following portions move vertically upward: the first slide member 5 with its integral part 7A of the split mandrel 7; the cover 12, the second slide member 10, the cam member 42, the locators 14 and 16, and the bearing cap 2 (which has been split from the connecting rod 1). The following parts remain stationary: the lower part 19 of the expanding mandrel 7, the guide member 18, the base member 30 and the slide unit 21.

Immediately upon completion of fracture separation, the wedge member 20 is withdrawn from between the mandrel halves 7A and 19, allowing the first slide member 5 to return to its pre-separation position. Actuation to return the first slide member 5 downwardly can employ any linear force device (springs, cylinders, etc.), or gravitation.

It will no be understood that the apparatus and process described above allow the bearing cap 2 to be fracture-separated from the connecting rod body 1, while all throughout the separation and re-mating process the location uniqueness of the bearing cap 2 with respect to the connecting rod body 1 is maintained.

With respect to the slide unit 21 seen in Figure 2, its purpose is 1) to bring the equipment required to separate and re-mate the connecting rod bipartite while it is located and retained in the part carrier, and 2) to perform separation and remating, and then withdraw from the connecting rod bipartite, leaving it located and retained as it was prior to separation.

While this invention has been described and illustrated with the connecting rod preform 1A in a vertical attitude, the particular part attitude is not a limitation of this invention. The process outlined above can be carried out with the connecting rod in any desired attitude. Of course, the various slides, actuators, clamps, locators and directions of motion, as previously described, would change their attitudes in a similar way, in order to keep the relative motions and directions consistent.

A detailed description of the process follows:
Firstly, the Locators 14-17 are activated to grip the preform.
Secondly, with the second slide member 10 withdrawn upwardly such that the projections 36 and 38 do not interfere, the preform aperture 6 is engaged with the split mandrel 7 and the ram slide assembly by a linear motion, with the split mandrel parts 7A and 19 being juxtaposed against each other.
Next, the three-point retention of the connecting rod bearing cap is activated, this taking place between the cap half 7A of the split mandrel 7 and the projections 36 and 38, which contact the bolt seat shoulders.
Then, the wedge member 20 or the wedge 20A is activated to split the mandrel 7, following which the wedge member 20 or wedge 20A is withdrawn.
Then, the bearing cap retention constituted by the projections 36 and 38 is disengaged.
Then, the split mandrel and the ram slide assembly is disengaged from the connecting rod by moving the slide unit 21 (illustrated in Figure 2).
Finally, the locators 14-17 are disengaged at the point of removal of the 2-piece preform which has been reassembled using two bolts.

## Claims

1. An apparatus for the fracture separation, into a bearing cap (2) and a connecting rod (1), of an integral preform (1A) which is configured to define a cylindrical aperture and two spaced-apart bolt seat shoulders (8, 9), the apparatus comprising:
a base member (30)
a guide member (18) fixed with respect to said base member, the guide member defining a first guideway extending in a first direction;
a first slide member (5) mounted to said guide member (18) for sliding movement along said first guideway in said first direction, the first slide member defining a second guideway also extending in said first direction;
a second slide member (10) mounted to said first slide member (5) for sliding movement with respect to said first slide member along said second guideway in said first direction,
a mandrel (7) which is split to define an upper part (7A) fixed with respect to the first slide member (5) and a lower part (19) fixed with respect to said base member (30), said upper part (7A) being movable between a first position in which it is spaced away from the lower part (19) and a second position in which it is juxtaposed against the lower part to define a cylindrical body having its axis lying in a second direction perpendicular to said first direction, movement of said upper part (7A) being simultaneous with movement of the first slide member along the first guideway with respect to said guide member, the upper and lower parts of said mandrel defining an internal tapered passageway (19A),
a wedge member (20) adapted, when the upper part is in its second position, to enter said tapered passageway (19A) and force said mandrel parts apart,
power means for moving said wedge member,
projections (36, 38) defined by said second slide member and adapted to contact the bolt seat shoulders of an integral preform while the cylindrical aperture thereof receives the split mandrel, and
means (11, 11A, 40) for selectively urging the second slide member toward the mandrel, thereby securely holding the integral preform in place,
whereby the wedge member (20) can enter the tapered passageway, forcing the mandrel parts apart and fracturing the preform into a bearing cap and a connecting rod.

2. The apparatus claimed in claim 1, in which the base member (20) is mounted for movement in said second direction

3. The apparatus claimed in claim 1, in which said means (11, 11A, 40) for selectively urging is a cam means, the apparatus further including further means for operating the cam means.

4. The apparatus claimed in claim 1, further comprising:
a first static locator means (14) mounted on said first slide member and adapted to contact one side of the portion of said preform intended to become the bearing cap,
a second static locator means (15) mounted on said first slide member and adapted to contact one side of the portion of said preform intended to become the connecting rod,
a first dynamic locator means (16) mounted on said first slide member and adapted to contact the other side of the portion of said preform intended to become the bearing cap,
a second dynamic locator means (17) mounted on said first slide member and adapted to contact the other side of the portion of said preform intended to become the connecting rod,
and resilient means for urging the dynamic locator means toward the respective static locator means.

5. A process for the fracture separation, into a bearing cap and a connecting rod, of an integral preform (1A) which is configured to define a cylindrical aperture and two spaced-apart bolt seat shoulders (8, 9), the process comprising:
a) fitting the cylindrical aperture of the preform over a cylindrical mandrel (7) which includes separate upper (7A) and lower (19) parts,
b) holding the preform in place over the mandrel by pressing against the bolt seat shoulders in the direction toward the mandrel, and
c) forcing the mandrel parts apart while holding the preform in place, thereby to fracture the preform into a bearing cap and a connecting rod; characterised in that
said upper part of the mandrel (7A) is fixed with respect to a first slide member (5) guided in a guideway fixed with respect to the lower part of the mandrel (19), such that when the parts are forced apart the first slide moves along said guideway, whilst the lower part of the mandrel (19) remains stationary.

6. The process claimed in claim 5, in which the upper and lower parts of the mandrel define an internal tapered passageway, and in which step c) is performed by forcing a wedge member into said passageway.

7. The process claimed in claim 5, in which step b) further includes using a pinching action between a static locator (14) and a dynamic locator (16) on either side of the portion of the preform intended to become the bearing cap, and a pinching action between a further static locator (15) and a further dynamic locator (17) on either side of the portion of the preform intended to become the connecting rod.

8. The process claimed in claim 5, in which step b) is carried out by urging, against the bolt seat shoulders (8, 9), spaced-apart projections (36, 38) on a second slide member (10) movable in a further guideway provided on the first slide member (5) parallel with said first-mentioned guideway, said urging being accomplished by a cam means.

9. The process claimed in claim 6, in which step b) further includes using a pinching action between a static locator (14) and a dynamic locator (16) on either side of the portion of the preform intended to become the bearing cap, and a pinching action between a further static locator (15) and a further dynamic locator (17) on either side of the portion of the preform intended to become the connecting rod.

10. The process claimed in claim 9, in which step b) is carried out by urging, against the bolt seat shoulder (8, 9) spaced-apart projections (36, 38) on a second slide member (10) movable in a further guideway provided on the first slide member (5) parallel with said first-mentioned guideway, said urging being accomplished by a cam means.

## Patentansprüche

1. Vorrichtung zur Bruchtrennung, in eine Lagerschalenkappe (2) und eine Verbindungsstange (1), eines integralen Vorformlings (1A), welcher konfiguriert ist, um eine zylindrische Öffnung und zwei beabstandete Bolzensitzschultern (8, 9) auszubilden, wobei die Vorrichtung umfaßt:
ein Basiselement (30)
ein Führungselement (18), das in bezug auf das Basiselement befestigt ist, wobei das Führungselement eine erste Führungsbahn aufweist, welche sich in einer ersten Richtung erstreckt;
ein erstes Gleitelement an dem Führungselement (18) zur Gleitbewegung entlang der ersten Führungsbahn in der ersten Richtung, wobei das erste Gleitelement eine zweite Führungsbahn definiert, welche sich ebenso in der ersten Richtung erstreckt;
ein zweites Gleitelement (10) an dem ersten Gleitelement (5) zur Gleitbewegung in bezug auf das erste Gleitelement entlang der zweiten Führungsbahn in der ersten Richtung,
einen Dorn (7), der geteilt ist, um einen oberen Teil (7A), welcher in bezug auf das erste Gleitelement (5) befestigt ist, und einen unteren Teil (19), welcher in bezug auf das Basiselement (30) befestigt ist, zu bilden, wobei der obere Teil (7A) zwischen einer ersten Position, in welcher er von dem unteren Teil (19) beabstandet ist, und einer zweiten Position bewegbar ist, in welcher er neben dem unteren Teil liegt, um einen zylindrischen Körper zu bilden, wobei die Achse hiervon in einer zweiten Richtung senkrecht zur ersten Richtung liegt, wobei die Bewegung des oberen Teils (7A) mit der Bewegung des ersten Gleitelements entlang der ersten Führungsbahn in bezug auf das Führungselement simultan ist, wobei der obere und der untere Teil des Dorns einen inneren kegelförmigen Durchgang (19A) bilden,
ein Keilelement (20), das darauf ausgerichtet ist, wenn der obere Teil in der zweiten Position ist, in den kegelförmigen Durchgang (19A) einzutreten und die Dornteile auseinanderzubringen,
Kraftmittel zur Bewegung des Keilelements,
Vorsprünge (36, 38), ausgebildet durch das zweite Gleitelement und darauf ausgerichtet, die Bolzensitzschultern eines integralen Vorformlings zu kontaktieren, während die zylindrische Öffnung hiervon den geteilten Dorn aufnimmt, und
Mitteln (11, 11A, 40) zum selektiven Pressen des zweiten Gleitelements zum Dorn, wodurch der integrale Vorformling an Ort und Stelle gehalten wird,
wodurch das Keilelement (20) in den kegelförmigen Durchgang eintreten kann, wodurch die Dornteile auseinandergebracht werden und der Vorformling in eine Lagerschalenkappe und eine Verbindungsstange auseinandergebrochen wird.

2. Vorrichtung gemäß Anspruch 1, wobei das Basiselement (20) zur Bewegung in der zweiten Richtung angebracht ist.

3. Vorrichtung gemäß Anspruch 1, wobei das Mittel (11, 11A, 40) zum selektiven Pressen ein Nockenmittel ist, wobei die Vorrichtung des weiteren weitere Mittel zum Betrieb des Nockenmittels aufweist.

4. Vorrichtung gemäß Anspruch 1, die des weiteren umfaßt:
ein erstes Statiklokalisierermittel (14), welches auf dem ersten Gleitelement angebracht ist und darauf ausgerichtet ist, eine Seite des Bereichs des Vorformlings zu kontaktieren, woraus die Lagerschalenkappe entstehen soll,
ein zweites Statiklokalisierermittel (15), welches auf dem ersten Gleitelement angebracht ist und darauf ausgerichtet ist, eine Seite des Bereichs des Vorformlings zu kontaktieren, woraus die Verbindungsstange entstehen soll,
ein erstes Dynamiklokalisierermittel (16), welches auf dem ersten Gleitelement angebracht ist und darauf ausgerichtet ist, die andere Seite des Bereichs des Vorformlings zu kontaktieren, woraus die Lagerschalenkappe entstehen soll,
ein zweites Dynamiklokalisierermittel (17), welches auf dem ersten Gleitelement angebracht ist und darauf ausgerichtet ist, die andere Seite des Bereichs des Vorformlings zu kontaktieren, woraus die Verbindungsstange entstehen soll,
und elastische Mittel zum Pressen des Dynamiklokalisierermittels zum entsprechenden Statiklokalisiermittel.

5. Verfahren zur Bruchtrennung, in eine Lagerschalenkappe und eine Verbindungsstange, eines integralen Vorformlings (1A), welcher konfiguriert ist, um eine zylindrische Öffnung und zwei beabstandete Bolzensitzschultern (8, 9) auszubilden, wobei das Verfahren umfaßt:
a) Einpassen der zylindrischen Öffnung des Vorformlings über einem zylindrischen Dorn (7) mit einem separaten oberen (7A) und unteren (19) Teil,
b) Halten des Vorformlings an Ort und Stelle über dem Dorn durch Drücken gegen die Bolzensitzschultern in der Richtung zum Dorn hin, und
c) Auseinanderpressen der Dornteile, während der Vorformling an Ort und Stelle gehalten wird, wodurch der Vorformling in eine Lagerschalenkappe und eine Verbindungsetange aufgebrochen wird; dadurch gekennzeichnet, daß
der obere Teil des Dorns (7A) in bezug auf ein erstes Gleitelement befestigt ist, geführt in einem Führungspfad, befestigt in bezug auf den unteren Teil des Dorns (19), so daß, wenn die Teile auseinandergepreßt werden, sich das erste Gleitstück entlang der Führungsbahn bewegt, während der untere Teil des Dorns (19) stationär bleibt.

6. Verfahren gemäß Anspruch 5, wobei der untere und der obere Teil des Dorns einen inneren kegelförmigen Durchgang bilden, und wobei Schritt c) ausgeführt wird, indem ein Keilelement in den Durchgang gepreßt wird.

7. Verfahren gemäß Anspruch 5, wobei Schritt b) des weiteren die Anwendung einer Klemmwirkung zwischen einem Statiklokalisierer (14) und einem Dynamiklokalisierer (16) auf jeder bwz. einer Seite des Bereichs des Vorformlings, woraus die Lagerschalenkappe entstehen soll, und einer Klemmwirkung zwischen einem weiteren Statiklokalisierer (15) und einem weiteren Dynamiklokalisierer (17) auf jeder bwz. einer Seite des Bereichs des Vorformlings, woraus die Verbindungsstange entstehen soll, umfaßt.

8. Verfahren gemäß Anspruch 5, wobei Schritt b) erfolgt durch Pressen gegen die Bolzensitzschultern (8, 9) von beabstandeten Vorsprüngen (36, 38) auf einem zweiten Gleitelement (10), bewegbar in einer weiteren Führungsbahn auf dem ersten Gleitelement (5) parallel zur erstgenannten Führungsbahn, wobei das Pressen durch ein Nockenmittel erfolgt.

9. Verfahren gemäß Anspruch 6, wobei Schritt b) des weiteren die Anwendung einer Klemmwirkung zwischen einem Statiklokalisierer (14) und einem Dynamiklokalisierer (16) auf jeder bwz. einer Seite des Bereichs des Vorformlings, woraus die Lagerschalenkappe entstehen soll, und einer Klemmwirkung zwischen einem weiteren Statiklokalisierer (15) und einem weiteren Dynamiklokalisierer (17) auf jeder bwz. einer Seite des Bereichs des Vorformlings, woraus die Verbindungsstange entstehen soll, umfaßt.

10. Verfahren gemäß Anspruch 9, wobei Schritt b) erfolgt durch Pressen gegen die Bolzensitzschultern (8, 9) von beabstandeten Vorsprüngen (36, 38) auf einem zweiten Gleitelement (10), bewegbar in einer weiteren Führungsbahn auf dem ersten Gleitelement (5) parallel zur erstgenannten Führungsbahn, wobei das Pressen durch ein Nockenmittel erfolgt.

## Revendications

1. Appareil pour la séparation par fracture, en un chapeau de palier (2) et une bielle (1), d'une ébauche monobloc (1A) qui est configurée de manière à définir une ouverture cylindrique et deux épaulements de siège de boulon mutuellement espacés (8,9), l'appareil comprenant:
une base (30) ;
une pièce de guidage (18) fixe par rapport à ladite base, la pièce de guidage définissant un premier guidage qui s'étend dans une première direction ;
un premier coulisseau (5) monté sur ladite pièce de guidage (18) pour un mouvement coulissant le long dudit premier guidage dans ladite première direction, le premier coulisseau définissant un deuxième guidage qui s'étend également dans ladite première direction ;
un deuxième coulisseau (10) monté sur ledit premier coulisseau (5) pour un mouvement coulissant par rapport audit premier coulisseau le long dudit deuxième guidage dans ladite première direction ;
un mandrin (7) qui est fendu de manière à définir une partie supérieure (7A) fixe par rapport au premier coulisseau (5) et une partie inférieure (19) fixe par rapport à ladite base (30), ladite partie supérieure (7A) étant déplaçable entre une première position dans laquelle elle est éloignée de la partie inférieure (19) et une deuxième position dans laquelle elle est juxtaposée conte la partie inférieure pour définir un corps cylindrique dont l'axe s'étend dans une deuxième direction perpendiculaire à ladite première direction, le mouvement de ladite partie supérieure (7A) s'effectuant en même temps que le mouvement dudit premier coulisseau le long du premier guidage par rapport à ladite pièce de guidage, les parties supérieure et inférieure dudit mandrin définissant un passage intérieur à section décroissante (19A) ;
une pièce en forme de coin (20) qui peut entrer, lorsque la partie supérieure est dans sa deuxième position, dans ledit passage à section décroissante (19A) et obliger lesdites parties du mandrin à s'écarter l'une de l'autre ;
un dispositif moteur pour déplacer ladite pièce en forme de coin ;
des saillies (36,38) définies par ledit deuxième coulisseau et prévues pour venir en contact avec les épaulements de siège de boulon d'une ébauche monobloc pendant que l'ouverture cylindrique de celle-ci reçoit le mandrin fendu, et
des moyens (11,11A, 40) qui poussent sélectivement le deuxième coulisseau vers le mandrin, afin de maintenir l'ébauche monobloc en place de façon sûre ;
de sorte que la pièce en forme de coin (20) peut entrer dans le passage à section décroissante, écarter de force les parties de mandrin l'une de l'autre et fracturer l'ébauche en un chapeau de palier et une bielle.

2. Appareil selon la revendication 1, dans lequel la base (30) est montée pour un mouvement dans ladite deuxième direction.

3. Appareil selon la revendication 1, dans lequel lesdits moyens de poussée sélective (11,11A,40) sont un dispositif de came, l'appareil comprenant en outre d'autres moyens pour actionner le dispositif de came.

4. Appareil selon la revendication 1, comprenant en outre :
un premier positionneur statique (14) monté sur ledit premier coulisseau et prévu pour venir en contact avec un côté de la partie de ladite ébauche qui doit devenir le chapeau de palier,
un deuxième positionneur statique (15) monté sur ledit premier coulisseau et prévu pour venir en contact avec un côté de la partie de ladite ébauche qui doit devenir la bielle,
un premier positionneur dynamique (16) monté sur ledit premier coulisseau et prévu pour venir en contact avec l'autre côté de la partie de ladite ébauche qui doit devenir le chapeau de palier,
un deuxième positionneur dynamique (17) monté sur ledit premier coulisseau et prévu pour venir en contact avec l'autre côté de la partie de ladite ébauche qui doit devenir la bielle, et
des moyens élastiques pour solliciter les positionneurs dynamiques vers les positionneurs statiques respectifs.

5. Procédé pour la séparation par fracture, en un chapeau de palier et une bielle, d'une ébauche monobloc (1A) qui est configurée de manière à définir une ouverture cylindrique et deux épaulements de siège de boulon mutuellement espacés (8,9), le procédé comprenant :
(a) l'ajustement de l'ouverture cylindrique de l'ébauche sur un mandrin cylindrique (7) qui comporte une partie supérieure (7A) et une partie inférieure (19) séparées,
(b) le maintien de l'ébauche en place sur le mandrin par pression contre les épaulements de siège de boulon dans la direction vers le mandrin, et
(c) l'écartement forcé des parties de mandrin l'une de l'autre tout en maintenant l'ébauche en place, afin de fracturer l'ébauche en un chapeau de palier et une bielle,
caractérisé en ce que :
ladite partie supérieure du mandrin (7A) est fixe par rapport à un premier coulisseau (5) guidé dans un guidage fixe par rapport à la partie inférieure du mandrin (19) de sorte que, lorsque les parties sont écartées de force l'une de l'autre, le premier coulisseau se déplace le long dudit guidage tandis que la partie inférieure du mandrin (19) reste immobile.

6. Procédé selon la revendication 5, dans lequel les parties supérieure et inférieure du mandrin définissent un passage intérieur à section décroissante, et dans lequel l'étape (c) est effectuée par introduction forcée d'une pièce en forme de coin dans ledit passage.

7. Procédé selon la revendication 5, dans lequel l'étape (b) comprend en outre l'utilisation d'une action de pincement entre un positionneur statique (14) et un positionneur dynamique (16) de part et d'autre de la partie de l'ébauche qui doit devenir le chapeau de palier,et d'une action de pincement entre un autre positionneur statique (15) et un autre positionneur dynamique (17) de part et d'autre de la partie de l'ébauche qui doit devenir la bielle..

8. Procédé selon la revendication 5, dans lequel l'étape (b) est effectuée par poussée, contre les épaulements de siège de boulon (8,9), de saillies mutuellement espacées (36,38) prévues sur un deuxième coulisseau (10) déplaçable dans un autre guidage formé sur le premier coulisseau (5) parallèlement audit guidage mentionné en premier, ladite poussée étant engendrée par un dispositif de came.

9. Procédé selon la revendication 6, dans lequel l'étape (b) comprend en outre l'utilisation d'une action de pincement entre un positionneur statique (14) et un positionneur dynamique (16) de part et d'autre de la partie de l'ébauche qui doit devenir le chapeau de palier, et d'une action de pincement entre un autre positionneur statique (15) et un autre positionneur dynamique (17) de pan et d'autre de la partie de l'ébauche qui doit devenir la bielle.

10. Procédé selon la revendication 9, dans lequel l'étape (b) est effectuée par poussée, contre l'épaulement de siège de boulon (8,9), de saillies mutuellement espacées (36,38) prévues sur un deuxième coulisseau (10) déplaçable dans un autre guidage formé sur le premier coulisseau (5) parallèlement audit guidage mentionné en premier, ladite poussée étant engendrée par un dispositif de came.
